# EUROPÄISCHE PATENTSCHRIFT

(11) **EP 2 744 589 B1**
(45) Veröffentlichungstag und Bekanntmachung des Hinweises auf die Patenterteilung: **23.01.2019**
(21) Anmeldenummer: 12726626.0
(22) Anmeldetag: 11.06.2012
(51) Int. Cl.: B01D 53/50, B01D 53/68, B01D 53/75, B01D 53/83, B01J 8/18

(54) **VERFAHREN UND VORRICHTUNG ZUR REINIGUNG VON ABGASEN MITTELS EINES WIRBELSCHICHTREAKTORS**
METHOD AND DEVICE FOR CLEANING EXHAUST GASES BY WAY OF FLUIDIZED BED REACTORS
PROCÉDÉ ET DISPOSITIF POUR L'ÉPURATION DE GAZ BRÛLÉS AU MOYEN D'UN RÉACTEUR À LIT FLUIDISÉ

(30) Priorität: 17.08.2011 DE 102011052788
(43) Veröffentlichungstag der Anmeldung: 25.06.2014
(73) Patentinhaber: Sauer, Harald, 60433 Frankfurt am Main (DE); Fujian Lonjing Environment Technology Co., Ltd., Xiamen Fujian (CN)
(72) Erfinder: Sauer, Harald, 60433 Frankfurt am Main (DE)
(74) Vertreter: Meyer-Dulheuer, Karl-Hermann
(86) Internationale Anmeldenummer: PCT/EP2012/061001
(87) Internationale Veröffentlichungsnummer: WO 2013/023800

(56) Entgegenhaltungen:
- EP-A1- 2 263 780
- WO-A1-2005/030368
- CN-A- 1 820 836
- CN-A- 101 648 112
- DE-A1- 3 526 008
- DE-A1- 19 517 863
- US-A- 3 885 934
- US-A- 4 176 019
- US-A- 4 518 750
- US-A- 5 238 659
- US-A- 5 662 049

## Beschreibung

Die vorliegende Erfindung betrifft ein Verfahren sowie eine Vorrichtung zur Reinigung von Abgasen unter Verwendung einer zirkulierenden Wirbelschicht.

Zirkulierende Wirbelschichten werden in unterschiedlichen technischen Prozessen eingesetzt, um Feststoffe mit Gasen, Flüssigkeiten oder anderen Feststoffen in engen Kontakt zu bringen.

Wirbelschichtanlagen werden nach dem Stand der Technik auch zur Abgasreinigung durch Abscheidung von Schadgasen wie SOx und/oder HCl und/oder HF aus Rauchgasen verwendet. In einer solchen Anlage nach dem Stand der Technik wird ein Rauchgas über eine Zuleitung in einen Wirbelschichtreaktor eingeblasen. Ein Sorbens, wie Kalkhydrat oder Kalziumoxid wird ebenfalls in den Wirbelschichtreaktor eingeblasen. Durch Feststoffzirkulation der in einem Filter abgeschiedenen Feststoffe zum Reaktor entsteht eine zirkulierende Wirbelschicht, in der das Rauchgas mit dem Sorbens in Berührung kommt und Schadgase aus dem Rauchgas abgeschieden werden.

Das Rauchgas wird mit den abgeschiedenen Reaktionsprodukten und dem Sorbens über eine Leitung aus dem Wirbelschichtreaktor geleitet und in einem nachgeschalteten Filtersystem mit Feststoffabscheider entstaubt. Das gereinigte Rauchgas kann dann entlassen werden. Ein Großteil des so abgeschiedenen Sorbens mit den Reaktionsprodukten kann wieder in den Wirbelschichtreaktor zurückgeführt werden.

Vom Betrieb von Anlagen unter Verwendung einer zirkulierenden Wirbelschicht ist bekannt, dass sich speziell an der Innenfläche des Reaktorraumes Anbackungen, Gemische aus Wasser und Feinstaub, bilden. Bei Reinigungsverfahren unter Einsatz von Sprühwasser im Wirbelschichtreaktor bilden sich diese Anbackungen besonders am Düsenmund der Wasserdüsen. Die Anbackungen entstehen zumeist zeitlich und räumlich ungleichmäßig im Wirbelschichtreaktor, weshalb deren Entstehung nicht vorhersehbar ist.

Diese Anbackungen können zum Einen durch einen unzureichende Feststoffbeladung der Wirbelschicht durch eine unsachgemäße Ausbildung der Wasserdüsen, der Position der Wasserdüsen hinsichtlich des Umfanges des Reaktorraumes und/oder der Höhe des Reaktorraumes sowie der Eindringtiefe der Wasserdüsen in den Reaktorraum verursacht werden.

Dadurch kann es zu einer Störung der gleichmäßigen Verteilung der rezirkulierenden Feststoffe und somit zu einer Verminderung des Stoffkontaktes und einer Reduktion der Schadgasabscheidung kommen. Diese Ansätze können nach unten fallen und dabei Düsen und Zufuhrleitungen des Reaktors verstopfen. Besonders bei zunehmender Größe der Anbackungen können diese zu erheblichen Störungen des Anlagenbetriebes führen.

In der DE 195 17 863 A1 wird ein Verfahren zur trockenen Entschwefelung eines Verbrennungsgases beschrieben, wodurch auch das Problem der Anbackungen und Verklebungen in der Abgasreinigungsanlage gelöst werden soll.

Das Dokument US4176019A beschreibt ein Verfahren zur Reinigung eines Gases, welches absorbierbare Verunreinigungen enthält, worunter insbesondere die Abgase von Reduktionszellen für die elektrolytische Herstellung von Aluminium fallen, wobei das Abgas tangential in den Boden einer zylindrischen Kammer eingelassen wird, von der es durch einen axialen Auslass am oberen Ende abgezogen wird, und wobei das feste Sorbens durch ein oder mehrere Einlässe am oberen Ende in die Kammer eingesprüht wird, so dass dieses in einer umlaufenden Zone des aufsteigenden Abgasstroms in den Abgasstrom gelangt.

Das Dokument US5662049A beschreibt ein Verfahren zur Reinigung eines außerhalb eines Reaktionsgefäßes bereitgestellten unreagierten Gases, in dem dieses durch einen Einlass tangential in eine sekundäre Verbrennungskammer eingelassen wird, so dass darin ein spiralförmig aufwärtsströmender Gasstrom des unreagierten Gases in der sekundären Verbrennungskammer erzeugt wird, wobei ein Feststoff durch den Einlass in die sekundäre Verbrennungskammer eingelassen wird und das unreagierte Gas spiralförmig aufwärts getragen wird, so dass unverbrannte Bestandteile, die in dem unreagierten Gas enthalten sind, vollständig verbrennen können.

Das Dokument EP2263780A1 beschreibt eine Rauchgasreinigungsanlage mit einem Wirbelschichtreaktor, welcher eine Rauchgaseinlasseinheit und eine Rauchgasauslasseinheit enthält, wobei sich an die Rauchgaseinlasseinheit eine Düseneinheit anschließt, die mit Düsen bestückt ist, und wobei die Düsen einen unterschiedlichen Querschnitt aufweisen.

Das Dokument DE3526008A1 beschreibt ein Verfahren zur Entfernung von Schwefeldioxiden und anderen gasförmigen Schadstoffen aus Rauchgasen mittels eines in der zirkulierenden Wirbelschicht geführten Reaktionsmittels, welches Natrium, Kalium, Calcium und/oder Magnesium als Kation enthält, und welches Oxid, Hydroxid und/oder Carbonat als Gegenion enthält, wobei das Reaktionsmittel in trockener Form und in Form einer wäßrigen Lösung oder Suspension über getrennte Aufgabestellen separat und wahlweise bei einer Mischtemperatur von Rauchgas und Reaktionsmittel von maximal 50 °C über dem Wasserdampftaupunkt zugeführt wird und die Form der Zugabe durch die Abgastemperatur und den Schwefeldioxidgehalt im Abgas geregelt wird.

Das Dokument US5238659A beschreibt eine Reaktionsvorrichtung mit einer Staubentfernungsanlage für Granularfließbette unter Verwendung eines granularen Reaktionsmittels, welche ein zylindrisches, luftdichtes Gefäß umfasst, das einen Gasausführungsstutzen, einen Reaktionsmittelzuführungsstutzen und einen Reaktionsmittelspeicherungsabschnitt im oberen Teil des zylindrischen, luftdichten Gefäßes enthält, weiterhin einen Gaseinleitungsstutzen, eine Gasreaktionskammer, die mit dem Gaseinleitungsstutzen verbunden ist, und eine Gasreaktionsstrecke, die in einem mittleren Teil der Gasreaktionskammer durch Gaseinleitungsschlitze gebildet wird, wobei die Gasreaktionsstrecke mit dem Reaktionsmittelspeicherungsabschnitt im oberen Teil des zylindrischen, luftdichten Gefäßes in offener Verbindung steht und dadurch eine stehende Säule mit dem Reaktionsmittel bildet, und ein unterer Teil mit einem regulierbaren Auslass, wobei der regulierbare Auslass die Bewegungsgeschwindigkeit der stehenden Säule des Reaktionsmittels durch den Gasstrom bestimmt, währenddessen die verunreinigenden und toxischen Substanzen aus dem aufwärtsströmenden Gasstrom absorbiert und dadurch entfernt werden.

Das Dokument US4518750A beschreibt ein Verfahren zur Polymerisation und Copolymerisation von alpha-Olefinen in der Gasphase, wobei das Verfahren in einem Wirbelschichtreaktor durchgeführt wird, der einen Verteiler zur Verteilung des fluidisierten Gases enthält und der aus zwei konischen, miteinander verbundenen Formteilen besteht, und wobei das untere konische Formteil auf seinen seitlichen inneren Oberflächen mit Rippen oder Leitblechen ausgestattet ist, die mit einer solchen Formgebung und einer solchen Neigung ausgestattet sind, dass diese dem Gasstrom eine tangentiale Richtung verleihen, und die einerseits die Feststoffpartikel im Gasstrom passieren lassen und andererseits die Feststoffpartikel beim Zurückfallen aufhalten, wenn der Gasstrom unterbrochen wird, und wobei der Wirbelschichtreaktor ein weiteres oberes Formteil enthält, welches sich in Aufwärtsrichtung erweitert und welches direkt auf dem unteren Formteil aufsetzt, und welches die Funktion besitzt, die Zirkulation des Feststoffes im Gasstrom aufrechtzuerhalten, und wobei das obere Formteil Vorrichtungsteile besitzt, die eine Rückführung des Gases und gleichzeitig den ungehinderten Durchfluss der Feststoffpartikel erlauben.

Das Dokument CN1820836A beschreibt eine kreisförmig zusammengesetzte Fluidisierungsvorrichtung zur Rauchgasentschwefelung in einer Wirbelschicht mit einem gleichlaufenden Drall, wobei die Fluidisierungsvorrichtung einen Dampfeinlasskanal, ein Venturirohr, einen Reduzierabschnitt und einen Entschwefelungszylinder umfasst, die nacheinander von unten nach oben verbunden sind, und die außerdem eine innerhalb des Venturirohrs installierte innere Hülse aufweist und die eine Verwirbelungseinheit zwischen der Hülse und dem Venturirohr aufweist, so dass ein Teilstrom innerhalb der inneren Hülse fließen kann und der andere Teilstrom innerhalb der Verwirbelungseinheit fließen kann, und sich so ein zusammengesetztes Rauchfluid bilden kann, das eine gleichförmige Fluidisierung sowohl innerhalb der inneren Hülse als auch außerhalb der inneren Hülse in dem Venturirohr ermöglicht. In einer Ausführungsform der Erfindung enthält das Venturirohr Gasleitbleche, die eine wirbeiförmige Gasführung herbeiführen.

Das Dokument WO2005030368A1 beschreibt eine Rauchgasentschwefelungsanlage für den Großmaßstab im Trockenverfahren, wobei der untere Teil des Wirbelschichtbettes in zwei oder mehrere unabhängige Unterbetten unterteilt ist, und der obere Teil des Wirbelschichtbettes ebenfalls mehrere unabhängige und kleine Wirbelschichtbetten enthält, die systematisch miteinander verbunden sind, so dass insgesamt die Höhe des Entschwefelungsturms deutlich reduziert werden kann.

Das Dokument CN101648112A beschreibt eine Rauchgasreinigungsvorrichtung und ein Rauchgasreinigungsverfahren zur Absorption von Aerosolen, durch die Rauchgase effizient von resorbierbaren Partikeln befreit werden können, wobei die Rauchgasreinigungsvorrichtung mit einem Reaktionskondensationsturm, einem Absorptionsbunker, einer Wassersprühvorrichtung, einem Staubentfernungssack und einer Materialumlaufrutsche versehen ist, und wobei Rauchgas in eine Kondensationszone der Rauchgasreinigungsvorrichtung eingeleitet wird und dann mit einem absorbierenden und desulfurierenden Staub in einem Mischbereich gemischt wird, und dieses dann über eine Venturi-Beschleunigungszone in einen Reaktionsbereich eintritt und gleichzeitig Wasser durch eine Wassersprühvorrichtung in die Venturi-Beschleunigungszone gesprüht wird, so dass grobe Partikel kondensiert werden und in der Kondensationszone vereinigt werden, dabei eine Entschwefelung durchgeführt und gereinigter Staub erhalten wird, und wobei die kondensierten und zusammengeführten Partikel durch den Staubentfernungssack aufgefangen und durch die Materialumlaufrutsche in den Mischbereich zurückgeführt werden und weiterhin ein von Partikeln gereinigtes Gas erhalten wird, das über einen Schornstein abgelassen werden kann.

Die Aufgabe der vorliegenden Erfindung war es, eine Möglichkeit zu finden, wodurch besagte Anbackungen in einem Wirbelschichtreaktor stark verringert bzw. vermieden werden können und somit den Stoff- und Wärmeaustausch während der Reaktion zu gewährleisten.

Gelöst wird die Aufgabe durch das erfindungsgemäße Verfahren zur Reinigung von Abgasen, bei dem in einem Wirbelschichtreaktor ein Abgas mit einem festen Sorbens zusammengeführt wird, in einem nachfolgenden Filtersystem Feststoffe abgeschieden werden und anschließend das Sorbens bis zu 99 % dem Wirbelschichtreaktor wieder zugeführt wird, wobei das Gas eine Rotation um die Strömungsachse im Wirbelschichtreaktor erfährt.

Die zirkulierende Wirbelschicht wird somit durch eine Rotationsbewegung längs der Strömungsachse des Gases, einschließlich der von ihr beförderten Feststoffe, überlagert. Dadurch wird eine gleichmäßige Abscheidung der Feststoffe an der Reaktorinnenwand bewirkt. Bereiche ohne Feststoffabsetzung werden somit verringert oder sogar gänzlich vermieden.

Das erfindungsgemäße Verfahren ist bei trockenen und/oder halbtrockenen Reinigungsverfahren in einem Wirbelschichtreaktor anwendbar. Unter trockenen Reinigungsverfahren sind insbesondere Verfahren zu verstehen, wie sie beispielsweise in den Dokumenten DE 195 17 863 A1 und DE 699 19 424 T2 beschrieben sind.

Unter "Abgase" im Sinne der vorliegenden Erfindung sind sämtliche gasförmige Abfallprodukte zu verstehen, die bei einem Stoffumwandlungsprozess anfallen. Dies umfasst Rauchgase aus Verbrennungsanlagen, Brandgase, Abgase aus Verbrennungskraftmaschinen, sowie kalte Abgase und Abgase aus metallurgischen Verfahren, wie Sinteranlagen.

Im erfindungsgemäßen Verfahren wird die Rotationsbewegung des Gases durch Einbauten in mindestens einer Mehrfachdüse welche sich im Gas- und Sorbenseinblasbereich des Wirbelschichtreaktors befindet, erreicht, und in weiteren Ausführungsformen durch die Neigung der mindestens einen Düse und/oder durch die Ausgestaltung der Zuleitung im Gas- und Sorbenseinblasbereich selbst erzeugt.

Unter "Gas- und Sorbenseinblasbereich" ist dabei der Bereich zu verstehen, in dem die Leitungen für die Rohgaszufuhr, des Sorbens sowie des gereinigten Gases und Sorbens aus der Rezirkulation wieder in den Wirbelschichtreaktor münden.

Die Rotation entsteht dadurch, dass der in den Wirbelschichtreaktor eintretende Gasstrom durch Einbauten in der mindestens einen Mehrfachdüse, gegebenenfalls auch durch die Ausbildung der Eintrittskanäle selbst in eine Rotation längs der Strömungsachse versetzt wird, ohne dabei einen großen Druckverlust zu verursachen. Unter "Ausbildung der Eintrittskanäle" ist dabei im Sinne der vorliegenden Erfindung jede geometrische Gestaltung zu verstehen, die eine Rotationsbewegung des Gases hervorrufen kann, wie eine schraubenartige Ausgestaltung.

Vorzugsweise kann auch die Richtung der Düsen derart verändert werden, dass beim Durchströmen des Gases durch die Düsen eine Rotation längs der Strömungsachse erfolgt. Die Rotation um die Strömungsachse sollte dabei nicht so stark sein, dass eine Trennung der Feststoffe vom Gas wie bei einem Zyklon erfolgt.

Erfindungsgemäß handelt es sich bei den Düsen um Mehrfachdüsen. Bei den Düsen handelt es sich bevorzugt um Venturi-Düsen.

Die Düse(n) dienen zudem dazu, um den Feststoff im Reaktor oberhalb der Düsen zu halten und somit einen Ausfall des Feststoffes aus der Wirbelschicht in den darunter liegenden Gaseintrittsbereich zu verhindern.

Die venturiartigen Düsen werden mit 30-70m/s, vorzugsweise mit 50m/s betrieben. Der Eintrittskonus einer Einzeldüse weist vorzugsweise 25-35°, besonders bevorzugt 30° von der Senkrechten auf, der Austrittskonus weist vorzugsweise 15-25°, besonders bevorzugt 20° von der Senkrechten auf. Bei Mehrfachdüsen beträgt der Austrittskonus vorzugsweise 5-15°, besonders bevorzugt 10° von der Senkrechten. Mehrfachdüsen enden im Konus mit dem Öffnungswinkel von vorzugsweise 15-25°, besonders bevorzugt 20° von der Senkrechten. Die Konstruktion ist vornehmlich auf eine Minimierung des Gesamtdruckverlustes des Düsensystems hin ausgelegt. Bei einer optimalen Ausgestaltung der Mehrfachdüsen laufen alle Düsen mit derselben Geschwindigkeit.

Erfindungsgemäß handelt es sich bei den Einbauten in die Mehrfachdüsen um Leitschaufeln. Unter Leitschaufeln im Sinne der vorliegenden Erfindung sind schaufelartige Einbauten in den Düsen zu verstehen, durch welche das durchströmende Gas so umgelenkt wird, dass es eine Rotation längs der Strömungsachse erfährt. Dazu weisen die Leitschaufeln eine Neigung auf, welche dabei maximal 10° beträgt. Sind mehrere Leitschaufeln in einer Düse vorhanden, müssen diese so ausgerichtet werden, dass das Gas eine einheitliche Rotation erfährt. Sind die Leitschaufeln innerhalb einer Düse oder auch die einzelnen Düsen einer Mehrfachdüse gegeneinander ausgerichtet, so bremsen sich die einzelnen Gasströme ab und es kommt zu keiner gleichmäßigen Rotationsbewegung.

Es können beliebig viele Schaufeln pro Düse eingesetzt werden. Jedoch ist eine geringe Anzahl an Schaufeln bevorzugt, um eine ausreichend Rotation zu gewährleisten.

Es ist weiterhin Gegenstand des erfindungsgemäßen Verfahrens, dass das Sorbens unterhalb der Mehrfachdüsen, die aus dem Feststoffabscheider rückgeführten Teilchen unterhalb oder oberhalb der Mehrfachdüsen, und das Wasser oberhalb der Mehrfachdüsen in den Wirbelschichtreaktor eingetragen werden.

In einer Ausgestaltungsform des erfindungsgemäßen Verfahrens wird der Wirbelschichtreaktor bei einer Temperatur von 5°C bis 30°C oberhalb der Kühlgrenztemperatur der im Wirbelschichtreaktor befindlichen Feststoffe betrieben, wobei die optimale Reaktionstemperatur durch Eindüsen von Wasser eingestellt.

Erfindungsgemäß wird im Wirbelschichtreaktor eine Gasgeschwindigkeit bezogen auf den leeren Reaktor von 2 m/s bis 10 m/s und/oder eine mittlere Feststoffverweilzeit von 15 min bis 200 min und/oder eine mittlere Feststoffbeladung von 1 kg/m³ bis 10 kg/m³ eingestellt.

Gemäß einem weiteren Aspekt der vorliegenden Erfindung werden die im Filter abgeschiedenen Feststoffe zu 0% bis 99%, vorzugsweise zu 20 % bis 99%, in den Wirbelschichtreaktor wieder zugeführt.

In einer weiteren bevorzugten Ausführungsform beträgt die mittlere Feststoffverweilzeit bei einmaligen Durchtritt durch den Wirbelschichtreaktor zwischen 5 sec und 60 sec und/oder die minimale Gasverweilzeit im Absorber 2 sec.

Insbesondere ist es bevorzugt, dass das feste Sorbens einen Teilchendurchmesser d50 von 1 µm bis 20 µm aufweist.

In einer weiteren Ausgestaltungsform des erfindungsgemäßen Verfahrens wird das Reingas zu 0 % bis 100 % zum Rohgaseintritt zurückgeführt.

Unter Reingas ist im Sinne der vorliegenden Erfindung gereinigtes Rohgas (Abgas) zu verstehen, dass den Wirbelschichtreaktor mindestens einmal durchlaufen hat.

Weitere Vorteile ergeben sich aus einer Vorrichtung zur Durchführung des erfindungsgemäßen Verfahrens zur Reinigung von Abgasen in einem Wirbelschichtreaktor, wobei der Gas- und Sorbenseinblasbereich des Wirbelschichtreaktors so ausgestattet ist, dass das Rohgas in eine Rotationsbewegung um die Strömungsachse im Wirbelschichtreaktor bringbar ist.

In der erfindungsgemäßen Vorrichtung ist zur Erzeugung der Rotationsbewegung im Gas- und Sorbenseinblasbereich des Wirbelschichtreaktors mindestens eine Düse mit Einbauten vorhanden.

Es ist weiterhin bevorzugt, dass das Modul zur Erzeugung der Rotationsbewegung nachrüstbar ist. In der erfindungsgemäßen Vorrichtung handelt es sich bei den Düsen um Mehrfachdüsen. Bei den erfindungsgemäßen Einbauten in die Mehrfachdüsen handelt es sich um Leitschaufeln.

Gemäß einem weiteren Aspekt der vorliegenden Erfindung dient der Gas- und Sorbenseinblasbereich des Wirbelschichtreaktors durch spezifische Formgebung so ausgestaltet ist, dass dieser selbst zur Erzeugung der Rotationsbewegung dient.

In einer weiter bevorzugten Ausführungsform wird die Rotationsbewegung im Gas- und Sorbenseinblasbereich des Wirbelschichtreaktors durch die Neigung der mindestens einen Düse erzeugt.

Die vorliegende Erfindung wird anhand folgender Figuren näher erläutert, worin:
Fig. 1 ein Fließbild des erfindungsgemäßen Verfahrens zeigt;
Fig. 2 eine nicht erfindungsgemäße Einzeldüse mit Leitschaufeln im Gaseintritt in der Seitenansicht zeigt, wobei es sich um das Detail "Y" der Fig. 1 handelt;
Fig. 3 eine nicht erfindungsgemäße Einzeldüse mit Leitschaufeln im Gaseintritt in der Draufsicht zeigt;
Fig. 4 eine Mehrfachdüse mit Leitschaufeln im Gaseintritt in der Draufsicht zeigt; und
Fig. 5 eine Mehrfachdüse mit Leitschaufeln im Gaseintritt in der Seitenansicht zeigt.

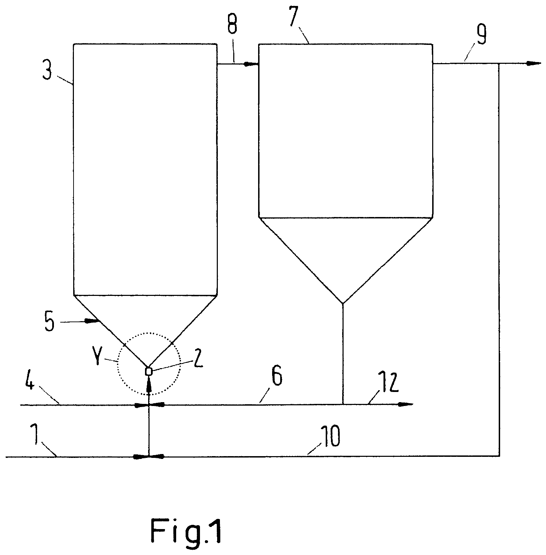

Fig. 1 zeigt das Fließbild des erfindungsgemäßen Verfahrens. Über eine Rohgasleitung (1) wird das zu reinigende Abgas, welches gasförmigen Schadstoffe und ggf. feinkörnige Feststoffe, wie Flugasche, enthält, von unten über eine Mehrfachdüse (2) in den Wirbelschichtabsorber (3) eingeleitet. Der Wirbelschichtabsorber (3) besteht aus einem sich vertikal erstreckendem Kessel, wobei der untere Teil konusförmig (5) gestaltet ist. Das Sorbens wird über eine Leitung (4) in den Wirbelschichtabsorber (3) eingetragen. Zur Reinigung von Abgasen, welche saure Schadgase wie SOx, HCl und/oder HF enthalten wird vorzugsweise feinkörniges festes Kalkhydrat (Ca(OH)₂) als Sorbens (Absorptionsmaterial) eingesetzt.

Zur optimalen Einstellung der Absorptionstemperatur, die 5 bis 30°C über der Kühlgrenztemperatur der in der Wirbelschicht befindlichen Feststoffe liegt, wird Wasser im unteren konusförmigen Absorber (5) eingedüst.

Die sauren Bestandteile des Abgases reagieren in der expandierten sog. zirkulierenden Wirbelschicht zu den festen Reaktionsprodukten, die zusammen mit den im Rohgas enthaltenen Feststoffen, wie Flugasche, und dem Sorbens die expandierte Wirbelschicht bilden.

Über eine Leitung (8) gelangt das Gas-Feststoffgemisch nach Durchlaufen des Wirbelschichtreaktors in ein Filtersystem mit Feststoffabscheider (7), wo das Gas entstaubt wird. Das entstaubte Reingas verlässt den Filter über die Leitung (9) und kann bei Teillast der Anlage wieder der Rohgasleitung (1) über die Rückführleitung (10) zugeführt werden, so dass der Wirbelschichtreaktor immer unabhängig vom Rohgasstrom bei optimaler Gasgeschwindigkeit und damit optimaler Fluiddynamik betrieben werden kann.

Feststoffe können dem Wirbelschichtreaktor über eine Leitung (6) wieder zugeführt werden. Insbesondere ist eine Rückführung des Sorbens über die Leitung (6) vorteilhaft. Der Austrag des Reaktionsproduktes findet über die Leitung (12) statt.

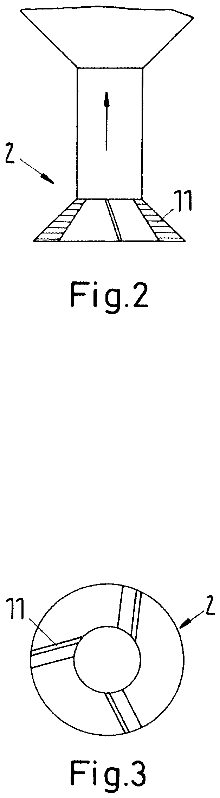

Die Figuren 2 bis 5 zeigen Beispiele für die Ausführung des Gaseintritts in den Wirbelschichtreaktor als Einzel- bzw. als Mehrfachdüse für größere Anlagen. Durch die Anordnung der Leitschaufeln im Eintrittskonus der Einzel- bzw. Mehrfachdüse wird eine Rotation des Gases in Strömungsrichtung bewirkt.

In den Fig. 2 und Fig. 3 ist eine nicht erfindungsgemäße Einzeldüse im Detailausschnitt "Y" zu sehen. Die Einzeldüse ist mit drei Leitschaufeln (11) bestückt, welche gleichmäßig, d.h. in einem Winkel von 120° bezogen auf den kreisförmigen Durchmesser der Düse, in der Düse verteilt sind. Alle Leitschaufeln der Düse weisen denselben Neigungswinkel auf.

Die venturiartigen Düsen werden mit 30-70m/s, vorzugsweise mit 50m/s betrieben. Der Eintrittskonus weist vorzugsweise 30° von der Senkrechten auf, der Austrittskonus 20° von der Senkrechten. Die Konstruktion ist vornehmlich auf eine Minimierung des Gesamtdruckverlustes des Düsensystems hin ausgelegt.

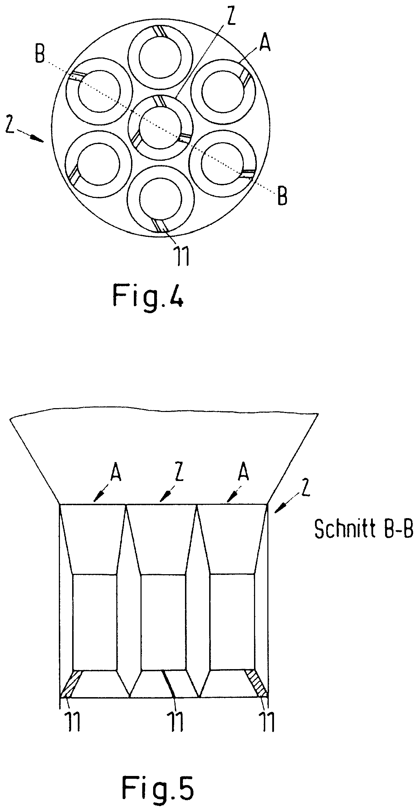

In den Fig. 4 und Fig. 5 ist eine Mehrfachdüse im Detailausschnitt "Y" zu sehen. Fig. 5 zeigt dabei die Mehrfachdüse der Fig.4 in der Schnittebene B-B. Diese Mehrfachdüse besteht aus 7 Einzeldüsen, wobei die zentrale Düse (Z) mit drei Leitschaufeln ausgestattet ist, welche gleichmäßig in einem Winkel von 120° bezogen auf den kreisförmigen Durchmesser der Düse, in der Düse verteilt sind, und die äußeren sechs Düsen (A) mit jeweils einer Leitschaufel. Alle Leitschaufeln der Mehrfachdüse weisen denselben Neigungswinkel auf.

Bei Mehrfachdüsen beträgt der Austrittskonus 10° von der Senkrechten. Mehrfachdüsen enden im Konus mit dem Öffnungswinkel von 20° von der Senkrechten. Bei einer optimalen Ausgestaltung der Mehrfachdüsen laufen alle Düsen mit derselben Geschwindigkeit.

### Bezugszeichenliste

- 1.: Rohgasleitung
- 2.: Düse (Einzel- oder Mehrfachdüse)
- 3.: Wirbelschichtreaktor
- 4.: Leitung des Sorbens
- 5.: konusförmiger Bereich des Wirbelschichtreaktors
- 6.: Rezirkulation des Sorbens
- 7.: Filtersystem mit Feststoffabscheider
- 8.: Leitung
- 9.: Leitung
- 10.: Rückführungsleitung des gereinigten Rohgases
- 11.: Leitschaufel
- 12.: Austrag des Reaktionsproduktes
- A.: Düse im äußeren Ring einer Mehrfachdüse
- Z.: zentrale Düse einer Mehrfachdüse

## Patentansprüche

1. Verfahren zur Reinigung von Abgasen, bei dem in einem Wirbelschichtreaktor (3) ein Abgas mit einem Sorbens zusammengeführt wird, in einem nachfolgenden Filtersystem (7) Feststoffe abgeschieden werden und anschließend das Sorbens bis zu 99 % dem Wirbelschichtreaktor (3) wieder zugeführt wird, wobei
• das Gas eine Rotation um die Strömungsachse im Wirbelschichtreaktor (3) erfährt, wobei die Rotationsbewegung des Gases durch Einbauten in Düsen (2), welche sich im Gas- und Sorbenseinblasbereich des Wirbelschichtreaktors (3) befindet, erreicht wird, und
• die sauren Bestandteile des Abgases in einer expandierten sog. zirkulierenden Wirbelschicht zu den festen Reaktionsprodukten, die zusammen mit den im Rohgas enthaltenen Feststoffen, wie Flugasche, und dem Sorbens die expandierte Wirbelschicht bilden, reagieren, und
• es sich bei den Düsen (2) um Mehrfachdüsen handelt und die Einbauten in die Mehrfachdüsen Leitschaufeln (11) sind, und
• im Wirbelschichtreaktor (3) eine Gasgeschwindigkeit bezogen auf den leeren Reaktor von 2 m/s bis 10 m/s, und
• eine mittlere Feststoffverweilzeit von 15 min bis 200 min, und
• eine mittlere Feststoffbeladung von 1 kg/m³ bis 10 kg/m³ eingestellt wird.

2. Verfahren nach Anspruch 1, **dadurch gekennzeichnet, dass** die Rotationsbewegung des Gases zusätzlich durch die Neigung der Düsen (2) und/oder durch die Ausgestaltung der Zuleitung im Gas- und Sorbenseinblasbereich selbst erzeugt wird.

3. Verfahren nach einem der Ansprüche 1 oder 2, **dadurch gekennzeichnet, dass** das Sorbens unterhalb der Mehrfachdüsen (2), die aus dem Feststoffabscheider (7) rückgeführten Teilchen unterhalb oder oberhalb der Mehrfachdüsen (2), und Wasser oberhalb der Mehrfachdüsen (2) in den Wirbelschichtreaktor (7) eingetragen werden.

4. Verfahren nach einem der Ansprüche 1 bis 3, **dadurch gekennzeichnet, dass** der Wirbelschichtreaktor (3) bei einer Temperatur von 5 °C bis 30 °C oberhalb der Kühlgrenztemperatur der im Wirbelschichtreaktor (3) befindlichen Feststoffe betrieben wird, wobei die optimale Reaktionstemperatur durch Eindüsen von Wasser eingestellt wird.

5. Verfahren nach einem der Ansprüche 1 bis 4, **dadurch gekennzeichnet, dass** die im Filter abgeschiedenen Feststoffe zu 20 % bis 99% in den Wirbelschichtreaktor (3) wieder zugeführt werden.

6. Verfahren nach einem der Ansprüche 1 bis 5, **dadurch gekennzeichnet, dass** die mittlere Feststoffverweilzeit bei einmaligen Durchtritt durch den Wirbelschichtreaktor (3) zwischen 5 sec und 60 sec beträgt und/oder die minimale Gasverweilzeit im Absorber (7) 2 sec beträgt.

7. Verfahren nach einem der Ansprüche 1 bis 6, **dadurch gekennzeichnet, dass** das feste Sorbens einen Teilchendurchmesser d50 von 1 µm bis 20 µm aufweist.

8. Verfahren nach einem der Ansprüche 1 bis 7, **dadurch gekennzeichnet, dass** das Reingas zu 0 % bis 100 % zum Rohgaseintritt zurückgeführt wird.

9. Vorrichtung zur Durchführung eines Verfahrens nach einem der Ansprüche 1 bis 8 zur Reinigung von Abgasen in einem Wirbelschichtreaktor (3), in dem das Gas-Feststoffgemisch nach Durchlaufen des Wirbelschichtreaktors (3) über eine Leitung (8) in ein Filtersystem mit Feststoffabscheider (7), wo das Gas entstaubt wird, gelangt, die Feststoffe dem Wirbelschichtreaktor (3) über eine Leitung (6) wieder zugeführt werden, das entstaubte Reingas den Filter (7) über eine Leitung (9) verlässt, und der Austrag des Reaktionsproduktes über eine andere Leitung (12) stattfindet, wobei
• der Gas- und Sorbenseinblasbereich des Wirbelschichtreaktors (3) so ausgestattet ist, dass das Rohgas in eine Rotationsbewegung um die Strömungsachse im Wirbelschichtreaktor (3) bringbar ist, wobei zur Erzeugung der Rotationsbewegung im Gas- und Sorbenseinblasbereich des Wirbelschichtreaktors (3) Düsen (2) mit Einbauten vorhanden sind, und
• es sich bei den Düsen (2) um Mehrfachdüsen handelt und die Einbauten in die Mehrfachdüsen Leitschaufeln (11) sind.

10. Vorrichtung nach Anspruch 9, **dadurch gekennzeichnet, dass** die Rotationsbewegung des Gases zusätzlich durch die Neigung der Düsen (2) und/oder durch die Ausgestaltung der Zuleitung im Gas- und Sorbenseinblasbereich selbst erzeugt wird.

11. Vorrichtung nach einem der Ansprüche 9 oder 10, **dadurch gekennzeichnet, dass** es sich bei den Düsen (2) um Venturi-Düsen handelt.

12. Vorrichtung nach einem der Ansprüche 9 bis 11, **dadurch gekennzeichnet, dass** bei mehreren Leitschaufeln (11) in einer Düse (2) diese so ausgerichtet sind, dass das Gas eine einheitliche Rotation erfährt.

## Claims

1. Process for purifying exhaust gases, in which process an exhaust gas is brought together with a sorbent in a fluidized bed reactor (3), solids are separated in a subsequent filter system (7) and subsequently the sorbent is fed back up to 99 % to the fluidized bed reactor (3), wherein
• the gas is rotated about the flow axis in the fluidized bed reactor (3), the rotational movement of the gas being achieved by installations in nozzles (2) located in the gas and sorbent injection region of the fluidized bed reactor (3), and
• the acidic components of the exhaust gas in an expanded so-called circulating fluidised bed react to the solid reaction products, which together with the solids contained in the raw gas such as fly ash and the sorbent form the expanded fluidised bed, and
• the nozzles (2) are multiple nozzles and the installations in the multiple nozzles are guide vanes (11), and
• in the fluidized bed reactor (3), a gas velocity relative to the empty reactor of 2 m/s to 10 m/s, and
• an average residence time for solids of 15 min to 200 min, and
• an average solids load of 1 kg/m³ to 10 kg/m³ is set.

2. Process according to claim 1, **characterized in that** the rotational movement of the gas is additionally produced by the inclination of the nozzles (2) and/or by the design of the supply line in the gas and sorbent injection area itself.

3. Process according to one of claims 1 or 2, **characterized in that** the sorbent is introduced into the fluidized bed reactor (7) below the multiple nozzles (2), the particles recycled from the solids separator (7) are introduced below or above the multiple nozzles (2), and water is introduced above the multiple nozzles (2).

4. Process according to one of claims 1 to 3, **characterized in that** the fluidized bed reactor (3) is operated at a temperature of 5 °C to 30 °C above the cooling limit temperature of the solids present in the fluidized bed reactor (3), the optimum reaction temperature being adjusted by injecting water.

5. Process according to one of claims 1 to 4, **characterized in that** 20 % to 99 % of the solids separated in the filter are fed back into the fluidized bed reactor (3).

6. Process according to one of claims 1 to 5, **characterized in that** the average residence time of solids at one-time passage through the fluidized bed reactor (3) is between 5 sec and 60 sec and/or the minimum gas residence time in the absorber (7) is 2 sec.

7. Process according to one of claims 1 to 6, **characterized in that** the solid sorbent has a particle diameter d50 of 1 µm to 20 µm.

8. Process according to one of claims 1 to 7, **characterized in that** the cleaned gas is returned of from 0 % to 100 % to the raw gas inlet.

9. Device for carrying out a process according to one of claims 1 to 8 for cleaning exhaust gases in a fluidized bed reactor (3), in which the gas-solid mixture after passing through the fluidized bed reactor (3) is passed via a line (8) into a filter system with a solids separator (7), where the gas is de-dusted, the solids are returned to the fluidized bed reactor (3) via a line (6), the de-dusted clean gas exits the filter (7) via a line (9), and the reaction product is discharged via another line (12), wherein
the gas and sorbent injection area of the fluidized bed reactor (3) is equipped such that the raw gas can be set into a rotational movement around the flow axis in the fluidized bed reactor (3), wherein for generating the rotational movement, nozzles (2) with internal installations are being provided in the gas and sorbent injection area of the fluidized bed reactor (3), and wherein the nozzles (2) are multiple nozzles and the installations in the multiple nozzles are guide vanes (11).

10. Device according to claim 9, **characterized in that** the rotational movement of the gas is additionally generated by the inclination of the nozzles (2) and/or by the design of the supply line in the gas and sorbent injection area itself.

11. Device according to one of claims 9 or 10, **characterized in that** the nozzles (2) are venturi nozzles.

12. Device according to one of claims 9 to 11, **characterized in that** given a plurality of guide vanes (11) in a nozzle (2), these are aligned in such a way that the gas is brought into a uniform rotation.

## Revendications

1. Procédé de purification des gaz d'échappement, dans lequel un gaz d'échappement est réuni avec un sorbant dans un réacteur à lit fluidisé (3), les matières solides sont séparées dans un système de filtration ultérieur (7) et le sorbant est ensuite renvoyé jusqu'à un taux de 99 % vers le réacteur à lit fluidisé (3), où
• le gaz est tourné autour de l'axe d'écoulement dans le réacteur à lit fluidisé (3), le mouvement de rotation du gaz étant réalisé par des installations dans des buses (2) situées dans la région d'injection de gaz et de sorbant du réacteur à lit fluidisé (3), et
• les composants acides des gaz d'échappement dans un lit fluidisé expansé dit circulant réagissent aux produits de réaction solides qui, avec les solides contenus dans le gaz brut, tels que les cendres volantes et le sorbant, forment le lit fluidisé expansé, et
• les buses (2) sont des buses multiples et les installations dans les buses multiples sont des aubes directrices (11), et
• dans le réacteur à lit fluidisé (3), une vitesse des gaz par rapport au réacteur vide de 2 m/s à 10 m/s, et
• un temps de séjour moyen pour les solides de 15 min à 200 min, et
• une charge moyenne de matières solides de 1 kg/m³ à 10 kg/m³ sont realisés.

2. Procédé selon la revendication 1, **caractérisé en ce que** le mouvement de rotation du gaz est produit en outre par l'inclinaison des buses (2) et/ou par la conception de la conduite d'alimentation dans la zone d'injection de gaz et de sorbant elle-même.

3. Procédé selon l'une des revendications 1 ou 2, **caractérisé en ce que** le sorbant est introduit dans le réacteur à lit fluidisé (7) en dessous des buses multiples (2), les particules recyclées du séparateur de solides (7) en dessous ou au-dessus des buses multiples (2), et de l'eau au-dessus des buses multiples (2).

4. Procédé selon l'une des revendications 1 à 3, **caractérisé en ce que** le réacteur à lit fluidisé (3) fonctionne à une température de 5°C à 30°C au-dessus de la température limite de refroidissement des solides présents dans le réacteur à lit fluidisé (3), la température de réaction optimale étant ajustée par injection d'eau.

5. Procédé selon l'une des revendications 1 à 4, **caractérisé en ce que** 20 % à 99 % des solides séparés dans le filtre sont renvoyés dans le réacteur à lit fluidisé (3).

6. Procédé selon l'une des revendications 1 à 5, **caractérisé en ce que** le temps de séjour moyen des solides lors d'un passage unique à travers le réacteur à lit fluidisé (3) est compris entre 5 sec et 60 sec et/ou le temps de séjour minimum des gaz dans l'absorbeur (7) est de 2 sec.

7. Procédé selon l'une des revendications 1 à 6, **caractérisé en ce que** l'absorbant solide a un diamètre de particule d50 de 1 µm à 20 µm.

8. Procédé selon l'une des revendications 1 à 7, **caractérisé en ce que** le gaz purifié est ramené de 0 % à 100 % à l'entrée du gaz brut.

9. Dispositif pour la mise en oeuvre d'un procédé selon l'une des revendications 1 à 8 pour la purification des gaz d'échappement dans un réacteur à lit fluidisé (3), dans lequel le mélange gaz-solide après avoir traversé le réacteur à lit fluidisé (3) est transféré via une conduite (8) dans un système de filtration avec séparateur de solides (7), où le gaz est dépoussiéré,puis les solides sont renvoyés dans le réacteur à lit fluidisé (3) par une conduite (6), le gaz purifié dépoussiéré quitte le filtre (7) par une conduite (9), et le produit de réaction est évacué par une autre conduite (12), caractérisé en plus en ce que la région d'injection de gaz et de sorbant du réacteur à lit fluidisé (3) est équipée de telle sorte que le gaz brut peut être amené dans un mouvement de rotation autour de l'axe d'écoulement dans le réacteur à lit fluidisé (3), des buses (2) avec des structures internes étant prévues dans la région d'injection de gaz et de sorbant du réacteur à lit fluidisé (3) pour générer le mouvement de rotation, et que ces buses (2) sont des buses multiples et que ces structures internes sont des aubes directrices (11).

10. Dispositif selon la revendication 9, **caractérisé en ce que** le mouvement de rotation du gaz est en outre causé par l'inclinaison des buses (2) et/ou par la conception de la conduite d'alimentation dans la zone d'injection de gaz et de sorbant elle-même.

11. Dispositif selon l'une des revendications 9 ou 10, **caractérisé en ce que** les buses (2) sont des buses à venturi.

12. Dispositif selon l'une des revendications 9 à 11, **caractérisé en ce que**, avec une pluralité d'aubes directrices (11) dans une buse (2), celles-ci sont alignées de telle sorte que le gaz subit une rotation uniforme.
